# EUROPEAN PATENT SPECIFICATION

(11) **EP 3 130 500 B1**
(45) Date of publication and mention of the grant of the patent: **25.09.2019**
(21) Application number: 14888650.0
(22) Date of filing: 09.04.2014
(51) Int. Cl.: B60K 17/344, F16H 57/038

(54) **POWER TRANSFER UNIT FOR AUTOMOBILE**
LEISTUNGSÜBERTRAGUNGSEINHEIT FÜR AUTOMOBIL
UNITÉ DE TRANSFERT D'ÉNERGIE POUR AUTOMOBILE

(43) Date of publication of application: 15.02.2017
(73) Proprietor: GKN Driveline Japan Ltd, Tochigi City, Tochigi 328-8502 (JP)
(72) Inventor: IIZUKA, Kohji, Tochigi City Tochigi 328-8502 (JP); NIIMURA, Satoshi, Tochigi City Tochigi 328-8502 (JP)
(74) Representative: Neumann Müller Oberwalleney & Partner Patentanwälte
(86) International application number: PCT/JP2014/060274
(87) International publication number: WO 2015/155851

(56) References cited:
- DE-A1-102009 021 246
- FR-A1- 2 516 874
- JP-A- S5 889 425
- JP-A- H10 138 774
- JP-A- 2006 123 624
- JP-A- 2008 208 947

## Description

### TECHNICAL FIELD

The present invention relates to a power transmission device in an automobile, and in particular to a power transfer unit for an automobile for distributing torque from one set of axles to another set of axles particularly in a four-wheel-drive vehicle.

### BACKGROUND ART

In a front-wheel-drive vehicle, an engine installed in a front of the vehicle body generates torque and a differential receives and distributes the torque to right and left front-wheels. In a case of a four-wheel-drive vehicle, generally in combination with a transmission including the differential, a power transfer unit (PTU) for extracting and transmitting part of the torque to rear-wheels is used.

The PTU has to change axial direction from an output shaft of the transmission to a propeller shaft and also has to absorb an offset between these shafts. Design thereof must bear a severe restriction as locations of these shafts are determined in advance. Further a fact that the PTU is required to be installed in a relatively small space among other devices such as an engine and a transmission is also a requirement that limits the design.

The PTL 1, PTL 2 and PTL 3 disclose a related art.

### Citation List

### Patent Literature

PTL 1: Japanese Patent Application Laid-open No. 2008-208947
PTL 2: French patent application FR 2 516 874 A1
PTL 3: German patent application DE 10 2009 021246 A1

### SUMMARY OF THE INVENTION

Respective shafts in the PTU, an input shaft in particular, must be often elongated in its lengthwise direction to meet the aforementioned design requirements. To support such long shafts without eccentric motion or precessional motion is often difficult. Eccentric motion or precessional motion affects other members combined with the shaft in question or imposes a non-negligible load on oil seals for example, or, in severer cases, causes the device to vibrate.

The present invention has been achieved in light of the aforementioned problems. According to an aspect, a power transfer unit for extracting torque from a transmission of an automobile is comprised of: a casing having a first side having a coupling portion for combining with the transmission and a second side opposed to the first side; a first shaft being rotatably supported by a first bearing sitting on the first side of the casing and a second bearing sitting on the second side of the casing, penetrating the casing from the coupling portion to the second side, and combining with the transmission to receive the torque; a second shaft being rotatably supported by a third bearing sitting on the first side of the casing and a fourth bearing sitting on the second side of the casing and gearing with the first shaft to rotate in parallel with the first shaft, the second shaft comprising a bevel gear; and a third shaft being rotatably supported by the casing and extending in a direction distinct from the first shaft and the second shaft, the third shaft comprising an internal end including a pinion gear in mesh with the bevel gear and an external end led out of the casing, wherein the first bearing is disposed closer to the coupling portion than the bevel gear is.

### BRIEF DESCRIPTION OF THE DRAWINGS

FIG. 1 is a sectional plan view of a power transfer unit according to an embodiment of the present invention, which is taken from a section running along axes of respective shafts.
FIG. 2 is a side view of the power transfer unit viewed from a side opposed to a transmission.
FIG. 3 is a side view of the power transfer unit viewed from a side on the transmission.

### DESCRIPTION OF EMBODIMENTS

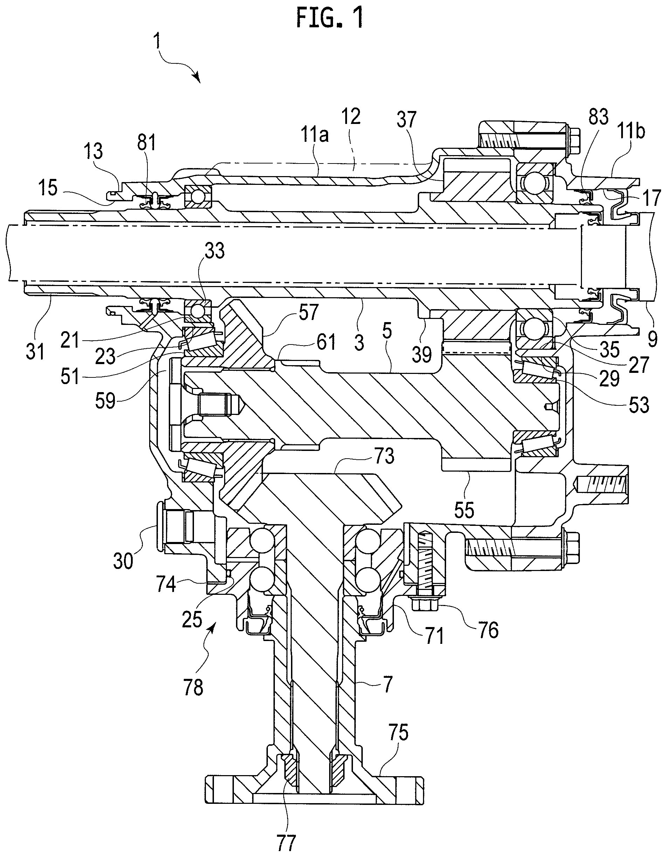

Exemplary embodiments of the present invention will be described hereinafter with reference to FIGs. 1 through 3.

Throughout the following description and the appended claims, a direction where first and second shafts run is defined as a lateral direction and a direction perpendicular thereto is defined as a longitudinal direction. Further, when the casing 11 is illustrated in a plan view, a series of wall sections thereof at one extremity in the lateral direction is defined as a first side and a series of wall sections at another extremity is defined as a second side.

In the meantime, relations of the right and the left, and the top and the bottom, illustrated here are no more than one example. Any modified embodiments where the right and the left are reversed or upside down are of course possible.

Referring to FIG. 1, a power transfer unit (PTU) according to the present embodiment can be used in an application for taking out part of torque from a transmission of a vehicle and transmitting it to a propeller shaft directed in a direction distinct from a shaft of the transmission.

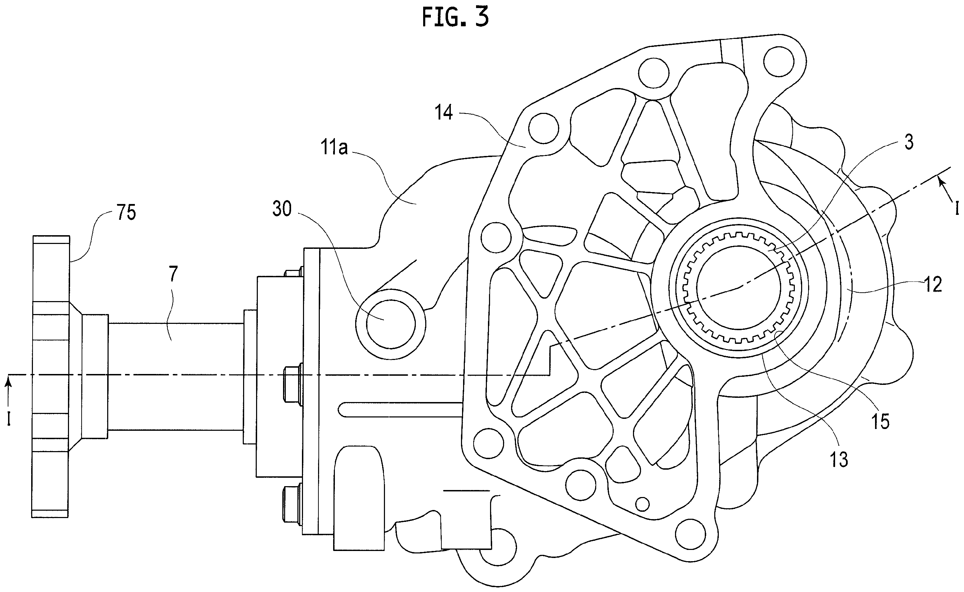

The PTU 1 is comprised of a casing 11 housing substantially the whole thereof. The casing 11 has a coupling portion 13 at the first side projecting leftward, with which the transmission is combined and fixed by means of a coupling flange 14 shown in FIG. 3. The propeller shaft is combined with a shaft 7 led downward out of the casing 11.

The PTU 1 is comprised of a first shaft 3, a second shaft 5, a third shaft 7, gears 37,55,57,73 for drivingly coupling them, and bearings 33,35,51,53,71 for supporting them. Any of them are housed in the casing 11. The first shaft 3 is combined with the transmission to receive the torque, the second shaft 5 gearing therewith to rotate in parallel therewith mediates the torque transmission, the bevel gear 57 and the pinion gear 73 change direction of rotation, and the PTU 1 then outputs the torque through the third shaft 7 to the propeller shaft.

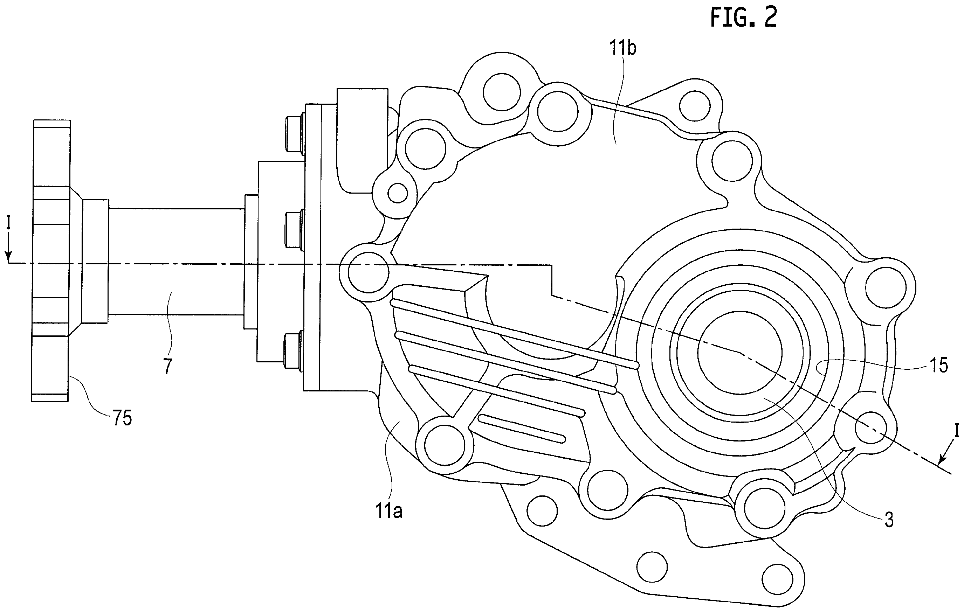

Referring to FIGs. 2 and 3, these shafts 3, 5 and 7 do not lie in the same plane but mutually have offsets in height. The sum of these offsets absorbs a relatively large offset between the transmission and the propeller shaft. Conversely, it may be difficult to absorb the large offset without these three shafts.

Referring again to FIG. 1, the casing 11 is so constructed as to be dividable into a first part 11a including the first side and a second part 11b including the second side. Each of the first part 11a and the second part 11b may be further dividable but is preferably formed in a unitary body. Being formed in a unitary body is beneficial for convenience of assembly and also in light of strength and stiffness.

The casing 11 is comprised of an opening 15 opened at the coupling portion 13 and an opening 17 opened at the second side, and the first shaft 3 penetrates the casing 11 from the opening 15 to the opening 17. The first shaft 3 is, at an end projecting from the opening 15, comprised of a coupling means such as splines 31, thereby being drivingly combined with the transmission.

The first shaft 3 may be tubular in its lengthwise direction. While the transmission has a differential installed therein for output, its output shaft 9 is led out through the first shaft 3 rightward. The output shaft 9 is for example coupled with the axle.

The first shaft 3 is rotatably supported by a pair of bearings 33,35 at least. To these bearings applicable are ball bearings for example but bearings of any other type may be instead applicable of course.

To seat the first bearing 33, the first part 11a of the casing 11 is, on the internal face and at the first side, comprised of a first race 21. The first race 21 fits on the entire circumference of the first bearing 33. To seat the second bearing 35, the second part 11b of the casing 11 is, on the internal face and at the second side, comprised of a second race 27. The second race 27 also fits on the entire circumference of the second bearing 35.

Around an entrance of the opening 13 and between its internal face and the first shaft 3, an oil seal 81 is interposed. The oil seal 81 is configured not only to seal the oil therein but also to prevent oil inflow from the exterior, thereby preventing both leakage and mixture of oil. Similarly, around an entrance of the opening 15 and between its internal face and the first shaft 3, an oil seal 83 is interposed. As will be understood from the above description, the first race 21 and the oil seal 81 inherently get close to each other and the second face 27 and the oil seal 83 inherently get close to each other.

The first shaft 3 is comprised of the first gear 37 for gearing with the second shaft 5. The first gear 37 may be formed in a unitary body with the first shaft 3 if possible but may be formed in a separate body as shown in the drawing. In a case of being a separate body, spline coupling may be used for coupling it with the first shaft 3, but welding or any other means may be instead used. To set the first gear 37 in place, the first shaft 3 may have a step 39. As a side face of the first gear 37 gets in contact with the step 39, it falls into place. Or, the part in question may be welded or any other means may be applied thereto.

The second shaft 5 runs in parallel with the first shaft 3 and its total length is generally housed in the casing 11. The second shaft 5 is also rotatably supported by a pair of bearings 51,53 at least. To bear thrust reaction force from the bevel gear 57, taper roller bearings for example are applicable to these bearings but any other type may be instead used.

To seat the third bearing 51, the first part 11a of the casing 11 is, on the internal face and at the first side, comprised of a third race 23. The third race 23 fits on the entire circumference of the third bearing 51. To seat the fourth bearing 53, the second part 11b of the casing 11 is, on the internal face and at the second side, comprised of a fourth race 29. The fourth race 29 also fits on the entire circumference of the fourth bearing 53.

The first race 21 and the third race 23 may have no offset in the lateral direction as shown in the drawing but may have some offset. Similarly the second race 27 and the fourth race 29 may have no offset in the lateral direction as shown in the drawing but may have some offset.

The second shaft 5 is comprised of the second gear 55 for gearing with the first shaft 3. The second gear 55 may be formed in a unitary body with the second shaft 5 as shown in the drawing but may be formed in a separate body.

The second shaft 5 is further comprised of the bevel gear 57. The bevel gear 57 is a so-called hypoid gear and may be formed in a unitary body with the second shaft 5 if possible. The bevel gear 57 is, however, normally formed in a separate body and is coupled with the second shaft 5 by means of splines for example. The bevel gear 57 is disposed between the gear set 37, 55 and the bearings 33, 51. To set the bevel gear in place, the second shaft 5 may have a step 61 and a bolt 59 may be used for the purpose of fixation and regulation of the position.

The bevel gear 57 may fit in the third bearing 51 and be directly supported thereby. As the third bearing 51 directly bears the reaction force received by the bevel gear 57, the bevel gear 57 is prevented from making eccentric motion or precessional motion and accordingly the second shaft 5 is prevented from making eccentric motion or precessional motion.

The third shaft 7 is, at its internal end, comprised of the pinion gear 73. Corresponding to the bevel gear 57, the pinion gear 73 is also a hypoid gear. The third shaft 7 is further, at the external end, comprised of a flange 75 for example for combining with the propeller shaft. Any combination means is applicable in place of the flange 75.

The third shaft 7 may be formed in a unitary body but may be formed from two or more members, which are mutually axially movable so as to regulate relative positions. In the example illustrated in the drawing for instance, it is constituted of a part including the pinion gear 73 and a part including the flange 75, which are mutually combined by means of splines. It is thereby capable of transmitting torque from the pinion gear 73 to the flange 75, and the pinion gear 73 is capable of regulating its axial position relative to the flange 73. It may be comprised of a nut 77 in order to regulate pressure to the bevel gear 57. More specifically, the present embodiment has an advantage to allow regulation of tooth contact of the pinion gear 73 onto the bevel gear 57.

The casing 11 is comprised of an opening 25 for receiving the third shaft 7. The third shaft 7 is, along with a tubular portion 71 housing the unit bearing 78 for example, inserted into the opening 25. The internal end of the third shaft 7 is within the casing 11 and makes the pinion gear 73 get from the second side to the bevel gear 57 to engage with the bevel gear 57. In order to regulate the axial position, a shim 74 is interposed between the casing 11 and the tubular portion 71 and tightening the bolt 76 gives pressure to the unit bearing 78.

The external end of the third shaft 7 is led out of the casing 11 and is combined with the propeller shaft via the flange 75. Around an external end of the tubular portion 71 and between the tubular portion 71 and the third shaft 7, an oil seal 72 is interposed. This prevents both leakage and mixture of oil as with the other oil seals.

As will be understood from the above explanation, the first race 21 and the third race 23 are included in the first part 11a, and the second race 27 and the fourth race 29 are included in the second part 11b. When separating the second part 11b from the first part 11a, the first race 21 and the third race 23 are exposed in the deepest part within the first part 11a. The first shaft 3 and the second shaft 5, along with the bearings and the gears accompanying them, can be readily fit in the exposed races 21 and 23, and mutual gearing can be simultaneously established. When the second part 11b is combined with the first part 11a so as to cover these parts, the bearings 35, 53 are simultaneously fit in the second race 27 and the fourth race 29. Assembly of these components is thereby finished. After finishing the assembly, the third shaft 7 is inserted therein and then tooth contact between the pinion gear 73 and the bevel gear 57 can be regulated. More specifically, the present embodiment prominently facilitates assembly of the PTU 1.

As will be readily understood as well, the first bearing 33 comes close to the coupling portion 13, the opening 15 and the oil seal 81 of the casing 11, and the second bearing 35 comes close to the opening 17 and the oil seal 83. Therefore, if the first shaft 3 made eccentric motion or precessional motion, an influence on the oil seals or components combined therewith would be small. Further the pair of bearings 33, 35 staying away from each other supports the first shaft 3, the eccentric motion or the precessional motion per se hardly occurs.

As the second shaft 5 is also supported at both ends, the eccentric motion or the precessional motion hardly occurs. Further, as the bevel gear 57 that receives the thrust reaction force is supported directly by the bearing 51, the source of the eccentric motion or the precessional motion per se is done away.

Further, as any of the bearings has its entire circumference supported by each race, off-center force will not act on any of the bearings and the races, thereby ensuring firm support for the shafts. As the first race 21 and the third race 23 constitute a unitary body and the second race and the fourth race constitute a unitary body, the whole structure has a high stiffness and also a high strength. Therefore each shaft is more firmly supported.

Further, as the bearing 33 is disposed further leftward as compared with the bevel gear 57, interference therebetween is avoided and the bevel gear 57 is not required to deviate upward in order to avoid the bevel gear 57. Further it is also not required to make the diameter of the bearing 33 larger in order to prevent the eccentric motion or the precessional motion. The casing 11 can be therefore reduced in size in the longitudinal direction and thus a region 12 shown in FIGs. 1 and 3, enclosed by dotted chain lines, can be cut off. As described already, the PTU has a restriction on installation, by which the PTU must be installed in a space among other devices. While this reduction in size might appear relatively minor, this significantly improves freedom of design.

Although the invention has been described above by reference to certain exemplary embodiments of the invention, the invention is not limited to the exemplary embodiments described above. Modifications and variations of the embodiments described above will occur to those skilled in the art, in light of the above teachings.

### INDUSTRIAL APPLICABILITY

A power transfer unit in which a shaft is prevented from making eccentric motion or precessional motion is provided.

## Claims

1. A power transfer unit (1) for extracting torque from a transmission of an automobile, comprising:
a casing (11) having a first side having a coupling portion (13) for combining with the transmission and a second side opposed to the first side;
a first shaft (3) being rotatably supported by a first bearing (33) and a second bearing (35) and combining with the transmission to receive the torque;
a second shaft (5) being rotatably supported by a third bearing (51) and a fourth bearing (53) and gearing with the first shaft (3) to rotate in parallel with the first shaft (3), the second shaft (5) comprising a bevel gear (57); and
a third shaft (7) being rotatably supported by the casing (11) and extending in a direction distinct from the first shaft (3) and the second shaft (5), the third shaft (7) comprising an internal end including a pinion gear (73) in mesh with the bevel gear (57) and an external end led out of the casing (11),
wherein the first bearing (33) is disposed closer in a lateral direction to the coupling portion (13) than the bevel gear (57) and the pinion gear (73) are,
wherein the first side comprises a first race (21) fitting on an entire circumference of the first bearing (33) and a third race (23) fitting on an entire circumference of the third bearing (51), the second side comprises a second race (27) fitting on an entire circumference of the second bearing (35) and a fourth race (29) fitting on an entire circumference of the fourth bearing (53), and
wherein the casing (11) is dividable into a first part (11a) including the first side and a second part (11b) including the second side,
**characterized in that**:
the first shaft (3) penetrates the casing (11) from the coupling portion (13) to the second side of the casing (11), and
the first bearing (33) and the third bearing (51) sit on the first part (11a), and the second bearing (35) and the fourth bearing (53) sit on the second part (11b).

2. The power transfer unit (1) of claim 1, wherein the third shaft (7) is so disposed that the pinion gear (73) gets from the second side to the bevel gear (57) to engage with the bevel gear (57).

3. The power transfer unit (1) of claim 1, wherein the bevel gear (57) fits in and is supported by the third bearing (51).

4. The power transfer unit (1) of claim 1, wherein the first race (21) and the third race (23) constitute a unitary body in the first part (11a), and the second race (27) and the fourth race (29) constitute a unitary body in the second part (11b).

## Patentansprüche

1. Kraftübertragungseinheit (1) zum Abnehmen von Drehmoment aus einem Getriebe eines Kraftfahrzeugs, umfassend:
ein Gehäuse (11) mit einer ersten Seite mit einem Kupplungsabschnitt (13) zum Verbinden mit dem Getriebe und einer zweiten Seite entgegengesetzt zur ersten Seite;
eine erste Welle (3), die mittels eines ersten Lagers (33) und eines zweiten Lagers (35) drehbar gelagert ist und mit dem Getriebe verbunden wird, um das Drehmoment aufzunehmen;
eine zweite Welle (5), die mittels eines dritten Lagers (51) und eines vierten Lagers (53) drehbar gelagert ist, und die mit der ersten Welle (3) in Verzahnungseingriff ist, um parallel zur ersten Welle (3) zu drehen, wobei die zweite Welle (5) ein Kegelrad (57) umfasst; und
eine dritte Welle (7), die mittels des Gehäuses (11) drehbar gelagert ist und sich in einer von der ersten Welle (3) und der zweiten Welle (5) unterscheidenden Richtung erstreckt, wobei die dritte Welle (7) ein inneres Ende mit einem Ritzel (73), das mit dem Kegelrad (57) in Eingriff ist, und ein aus dem Gehäuse (11) herausgeführtes äußeres Ende aufweist,
wobei das erste Lager (33) in einer Querrichtung näher zum Kupplungsabschnitt (13) angeordnet ist als das Kegelrad (57) und das Ritzel (73),
wobei die erste Seite einen ersten Ring (21), der auf einen gesamten Umfang des ersten Lagers (33) passt, und einen dritten Ring (23), der auf einen gesamten Umfang des dritten Lagers (51) passt, umfasst, wobei die zweite Seite einen zweiten Ring (27), der auf einen gesamten Umfang des zweiten Lagers (35) passt, und einen vierten Ring (29), der auf einen gesamten Umfang des vierten Lagers (53) passt, umfasst, und
wobei das Gehäuse (11) in einen ersten Teil (11a) mit der ersten Seite und einen zweiten Teil (11b) mit der zweiten Seite teilbar ist,
**dadurch gekennzeichnet, dass**:
die erste Welle (3) das Gehäuse (11) vom Kupplungsabschnitt (13) zur zweiten Seite des Gehäuses (11) durchdringt, und
das erste Lager (33) und das dritte Lager (51) auf dem ersten Teil (11a) sitzen, und das zweite Lager (35) und das vierte Lager (53) auf dem zweiten Teil (11b) sitzen.

2. Kraftübertragungseinheit (1) nach Anspruch 1, wobei die dritte Welle (7) so angeordnet ist, dass das Ritzel (73) von der zweiten Seite an das Kegelrad (57) kommt, um mit dem Kegelrad (57) in Eingriff zu kommen.

3. Kraftübertragungseinheit (1) nach Anspruch 1, wobei das Kegelrad (57) in das dritte Lager (51) passt und von diesem gelagert wird.

4. Kraftübertragungseinheit (1) nach Anspruch 1, wobei der erste Ring (21) und der dritte Ring (23) im ersten Teil (11a) einen einheitlichen Körper bilden und der zweite Ring (27) und der vierte Ring (29) im zweiten Teil (11b) einen einheitlichen Körper bilden.

## Revendications

1. Unité de transfert de puissance (1) pour extraire un couple à partir d'une transmission d'une automobile, comprenant :
un carter (11) ayant un premier côté ayant une partie de couplage (13) pour la combinaison avec la transmission et un deuxième côté opposé au premier côté ;
un premier arbre (3) supporté de manière rotative par un premier palier (33) et un deuxième palier (35) et se combinant avec la transmission pour recevoir le couple ;
un deuxième arbre (5) supporté de manière rotative par un troisième palier (51) et un quatrième palier (53) et s'engrenant avec le premier arbre (3) pour tourner en parallèle avec le premier arbre (3), le deuxième arbre (5) comprenant un engrenage conique (57) ; et
un troisième arbre (7) supporté de manière rotative par le carter (11) et s'étendant dans une direction distincte du premier arbre (3) et du deuxième arbre (5), le troisième arbre (7) comprenant une extrémité interne comprenant un pignon (73) en prise avec l'engrenage conique (57) et une extrémité externe menant hors du carter (11),
dans laquelle le premier palier (33) est disposé plus près dans une direction latérale de la partie de couplage (13) que ne le sont l'engrenage conique (57) et le pignon (73),
dans laquelle le premier côté comprend une premiere bague (21) s'adaptant à une circonférence entière du premier palier (33) et une troisième bague (23) s'adaptant à une circonférence entière du troisième palier (51), le deuxième côté comprend une deuxième bague (27) s'adaptant à une circonférence entière du deuxième palier (35) et une quatrième bague (29) s'adaptant à une circonférence entière du quatrième palier (53), et
dans laquelle le carter (11) est divisible en une première partie (11a) comprenant le premier côté et une deuxième partie (11b) comprenant le deuxième côté,
**caractérisée en ce que** :
le premier arbre (3) pénètre dans le carter (11) à partir de la partie de couplage (11) jusqu'au deuxième côté du carter (11), et
le premier palier (33) et le troisième palier (51) siègent sur la première partie (11a), et le deuxième palier (35) et le quatrième palier (53) siègent sur la deuxième partie (11b).

2. Unité de transfert de puissance (1) selon la revendication 1, dans laquelle le troisième arbre (7) est disposé de telle sorte que le pignon (73) va du deuxième côté vers l'engrenage conique (57) pour se mettre en prise avec l'engrenage conique (57).

3. Unité de transfert de puissance (1) selon la revendication 1, dans laquelle l'engrenage conique (57) s'adapte dans le troisième palier (51) et est supporté par celui-ci.

4. Unité de transfert de puissance (1) selon la revendication 1, dans laquelle la premiere bague (21) et la troisième bague (23) constituent un corps unitaire dans la première partie (11a), et la deuxième bague (27) et la quatrième bague (29) constituent un corps unitaire dans la deuxième partie (11b).
